(19)

Europäisches
Patentamt
European
Patent Office
Office européen
des brevets

(11)  **EP 2 258 896 A1**

(12)  **EUROPEAN PATENT APPLICATION**
published in accordance with Art. 153(4) EPC

(43) Date of publication:
**08.12.2010 Bulletin 2010/49**

(51) Int Cl.:
*D04H 1/72* (2006.01)      *B01D 39/16* (2006.01)
*B01D 71/32* (2006.01)      *B01D 71/34* (2006.01)
*B01J 20/26* (2006.01)      *C02F 1/28* (2006.01)
*D01D 5/04* (2006.01)      *D04H 1/42* (2006.01)

(21) Application number: **09725958.4**

(22) Date of filing: **25.03.2009**

(86) International application number:
**PCT/JP2009/055901**

(87) International publication number:
**WO 2009/119638 (01.10.2009 Gazette 2009/40)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **27.03.2008 JP 2008083390**

(71) Applicant: **Kurita Water Industries Ltd.
Shinjuku-ku, Tokyo 160-8383 (JP)**

(72) Inventors:
• **KAWAKATSU, Takahiro
  Tokyo 160-8383 (JP)**
• **KOBAYASHI, Hideki
  Tokyo 160-8383 (JP)**
• **OGAWA, Yuichi
  Tokyo 160-8383 (JP)**

(74) Representative: **HOFFMANN EITLE
Patent- und Rechtsanwälte
Arabellastraße 4
81925 München (DE)**

(54)  **POLYMER FIBER MATERIAL, METHOD OF PRODUCING THE SAME AND FILTER FOR FILTERING FLUID**

(57)    There is provided a hybrid polymer fiber material containing a non-electrolytic polymer and an electrolytic polymer and having properties and advantages of both polymers, and provided a method of producing the hybrid polymer fiber material, and provided a filter made of the hybrid polymer fiber material. A voltage is applied between a nozzle 1 and a target 3 (opposite surface) such that the nozzle 1 is positive and such that the target 3 is negative. Then, the mixed solution of the non-electrolytic polymer and the electrolytic polymer is ejected from the nozzle 1 to the target 3, so that hybrid polymer fiber material 2 containing the non-electrolytic polymer and the electrolytic polymer is accumulated on the target 3. The hybrid polymer fiber material 2 is used as a filter for fluid filtration.

Fig. 1

**Description**

Field of the Invention

The present invention relates to a hybrid polymer fiber material that contains a non-electrolytic polymer and an electrolytic polymer and relates to a method of producing the hybrid polymer fiber material. Furthermore, the present invention relates to a filter that is made of the hybrid polymer fiber material and that is used for fluid filtration.

Background of the Invention

In order to highly purify ultrapure water used in a semiconductor manufacturing process or the like, a pleated ion exchange filter is widely used. The pleated ion exchange filter is produced by forming a flat film, such as nonwoven fabric or a porous film, into a pleated shape.

In the pleated ion exchange filter, a flow is likely to concentrate on the edge of the pleat. Therefore, sufficient removal of ion can not be provided in the significantly low concentration region. In addition, the film is so thin that ion capacity of the film is very small resulting in such a filter having a short life. Also in terms of particles to be removed, the lifetime and removal efficiency, which have been described above, have become an issue. In cases where the film thickness is increased and where pore size of the film is reduced in order to improve ion removal efficiency, a problem of water permeability reduction is caused.

An electrospinning technique (electrostatic spinning technique) is known as a method of producing a fine fiber in which the diameter of fiber is in the order of nanometers (see, Japanese Unexamined Patent Application Publication Nos. 2006-144138 and 2007-92237). In the electrospinnig technique, an electric field is generated between a nozzle and a target, and then a liquid material is ejected from the nozzle in the form of a fine fiber, thereby performing fiber spinning. The fine fibers are gathered on the target to form a nonwoven fabric.

In cases where a non-electrolytic polymer and an electrolytic polymer are used to form fibers, each of the polymers has an excellent advantage and also has a disadvantage. The characteristics of the non-electrolytic polymer and the electrolytic polymer will be described below.

<Characteristics of Non-electrolytic Polymer>

A certain type is easily applied for the electrospinning alone.
Repulsion between individual fibers is not generated after the electrospinning, and therefore a nonwoven fabric is easily formed.
A hydrophobic type or a hydrophilic type is capable selected.
The hydrophobic type has durability but has low water permeability.

<Characteristics of Electrolytic Polymer>

It is difficult to be applied for the electrospinning alone.
Even if it is capable of being used for the electrospinning, individual fibers repel each other with the result that the gathered fiber has a large bulk and settles poorly (namely, exhibiting small bulk density), resulting in being inappropriate for nonwoven fabric formation.
Hydrophilicity is exhibited.
An adsorptive property for ionic substances is exhibited.
A certain type has solubility for water.

In general, the non-electrolytic polymer has a high mechanical strength and a high chemical resistance, but is difficult to become wet (exhibiting low hydrophilicity), and has poor dyeability (exhibiting a low adsorption property for the ionic substances). On the other hand, the electrolytic polymer has high hydrophilicity and good dyeability, but has a problem with spinnability and mechanical strength.

In a manufacturing process of electronic components, a process has been also required in which pure water is able to be produced at a high temperature in the range from 60°C to 100°C. Accordingly, a material to be used for the ion exchange filter is required to have the ion exchange performance and to also exhibit thermal resistance. Polyvinylidene fluoride, when it is used as a material of the existing ion exchange filter, has high thermal resistance but has hydrophobicity, and therefore such a material is required to be hydrophilized using plasma or the like.

If the advantages of both polymers are capable of being combined, innovative fibers are expected to be produced. However, the non-electrolytic polymer and the electrolytic polymer are often individually dissolved in different solvents, and therefore the both polymers have never been used at the same time to form fibers.

# EP 2 258 896 A1

Patent Document 1: Japanese Unexamined Patent Application Publication No. 2007-92237
Patent Document 2: Japanese Unexamined Patent Application Publication No. 2006-144138

Summary of the Invention

It is an object of the present invention to provide a hybrid polymer fiber material having properties and advantages of both of a non-electrolytic polymer and an electrolytic polymer, to provide a method of producing the hybrid polymer fiber material, and to provide a filter that is made of the hybrid polymer fiber material and that is used for fluid filtration.

The method of producing the polymer fiber material of the present invention includes a material solution producing process in which a material solution is produced by dissolving the non-electrolytic polymer and the electrolytic polymer in a mixed solvent, and includes an electrospinning process in which the mixed solution is used for electrospinning. The mixed solvent at least contains a first solvent, in which the non-electrolytic polymer is capable of being dissolved and which has a concentration of water of not more than 10% by weight, and contains a second solvent in which the electrolytic polymer is capable of being dissolved.

According to a first preferred embodiment, the method of producing the polymer fiber material includes the following processes: a process of preparing a mixed solvent in which two types of the polymers are soluble, the mixed solvent at least containing a first solvent in which a non-electrolytic polymer is soluble and which has a concentration of water of not more than 10% by weight and containing a second solvent in which an electrolytic polymer is soluble; a process in which the non-electrolytic polymer and the electrolytic polymer are dissolved in the mixed solvent to produce a mixed solution; and a process in which the mixed solution is used for electrospinning.

According to a second preferred embodiment, the method of producing the polymer fiber material includes the following processes: a process in which a first solution is prepared by dissolving a non-electrolytic polymer in a first solvent having a concentration of water of not more than 10% by weight; a process in which a second solution is prepared by dissolving an electrolytic polymer in a second solvent; a process in which the first and second solvents are mixed with each other so as to be maintained in a dissolved state with the result that a mixed solution is prepared; and a process in which the mixed solution is used for electrospinning.

According to a third preferred embodiment of the method of producing the polymer fiber material, in the first or second embodiment, the non-electrolytic polymer and/or the electrolytic polymer is a fluorine polymer.

According to a fourth preferred embodiment of the method of producing the polymer fiber material, in any one of the first to third embodiments, the non-electrolytic polymer is polyvinylidene fluoride.

According to a fifth preferred embodiment of the method of producing the polymer fiber material, in any one of the first to fourth embodiments, the electrolytic polymer is a perfluorocarbon sulfonate polymer.

According to a sixth preferred embodiment of the method of producing the polymer fiber material, in any one of the first to fifth embodiments, the solvent of the mixed solution at least contains alcohol and water and has polymer concentration that is in the range from 5 to 40% by weight.

According to a seventh preferred embodiment of the method of producing the polymer fiber material, in any one of the first to sixth embodiments, the solution in which the non-electrolytic polymer and the electrolytic polymer are dissolved is held at a temperature higher than a gel temperature for the purpose of electrospinning.

According to an eighth preferred embodiment of the method of producing the polymer fiber material, in any one of the first to seventh embodiments, the second solvent is prepared by adding a solvent having a boiling point higher than that of water to a solvent that has a concentration of water of not less than 10% by weight and then dehydrating the resultant solvent through evaporation with the result that the water concentration is decreased to less than or equal to 10% by weight.

According to a ninth preferred embodiment of the method of producing the polymer fiber material, in the eighth embodiment the evaporation is performed while gradually or sequentially decreasing the temperature of the solvent.

A polymer fiber material according to an aspect of the invention is produced by the above methods.

According to an aspect of the invention, the polymer fiber materials are preferably stacked in a planar manner or stacked on a porous hollow body, thereby producing a filter used for fluid filtration.

According to an aspect of the invention, there is provided the polymer fiber material as the hybrid polymer fiber material which contains the non-electrolytic polymer and the electrolytic polymer. The hybrid polymer fiber material is not only applied to the filter used for fluid filtration but is also capable of being variously applied to clothes, curtains, or adsorbing materials, and the like. Many types of non-electrolytic polymers easily forms fibers through electrospinning. Therefore, the mixed solution that contains the non-electrolytic polymer and the electrolytic polymer can be used to easily produce the hybrid polymer fiber material that contains the electrolytic polymer through electrospinning.

For example, the filter according to an aspect of the invention is made of nonwoven fabric of the hybrid polymer fiber material that is produced through the electrospinning. Such a filter does not cause an uneven flow as in the case of the pleated filter and has a long life. In addition, permeation flux is capable of being maintained at a high level for a long period of time.

According to an aspect of the invention, a ratio between the non-electrolytic polymer and the electrolytic polymer is changed, thereby controlling the characteristics, such as mechanical strength, hydrophilicity, and electric charges of the hybrid polymer fiber material produced by the spinning. Accordingly, various filters are capable of being provided, which are appropriately used for adsorption separation or exclusion separation of a slight amount of metals, organic substances, or fine particles that are contained in a fluid to be processed in processing of a fluid, such as air, organic gas, water, an aqueous solution, or an organic solvent or in processing of a gals-liquid mixture.

In cases where such a filter is used for an air filter, a charged substance such as amine is capable of being separated.

The filter according to an aspect of the invention is preferably used for production of ultrapure water or the like, and metallic ion concentration in the ultrapure water is capable of being decreased to an extremely low level. In recent years, a manufacturing process of electronic components requires processing of high-temperature water that is at a temperature of not less than 50°C (for example, from 60°C to 100°C). Thermally-resistant materials are employed as the non-electrolytic polymer and electrolytic polymer that are used for the production of the hybrid polymer fiber material, so that such high-temperature water is capable of being sufficiently processed.

Brief Description of Drawings

Fig. 1 is a perspective view schematically illustrating a method of producing a hybrid polymer fiber material according to an embodiment of the invention.
Fig. 2 is a micrograph illustrating a product in the Comparative Example 1.
Fig. 3 is a micrograph illustrating fibers in the Example 1.
Fig. 4 is a micrograph illustrating fibers in the Example 2.
Fig. 5 is a micrograph illustrating a hydrophilicity test of nonwoven fabric in the Comparative Example 2.
Fig. 6 is a micrograph illustrating a hydrophilicity test of nonwoven fabric in the Example 1.

Detailed Description

Embodiments of the invention will be hereinafter described in more detail.

A method of producing a polymer fiber material according to an embodiment of the invention has a process in which a mixed solution is prepared so as to contain a non-electrolytic polymer and an electrolytic polymer that are capable of being individually used for electrospinning. The method of producing the polymer fiber material also has a process in which the mixed solution is used for the electrospinning.

A preferred ultrafine fiber that is formed by the electrospinning is a significantly thin fiber having an equivalent diameter that is approximately in the range from 1 to 1000 nm, especially in the range from 10 to 700 nm. The equivalent diameter is a value that is provided by determining a cross-sectional area and the circumferential length of a cross-sectianal surface and then obtaining a formula: equivalent diameter=$4\times$cross-seCtianal area/circumferential length of cross-sectional surface. Preferably, the ultrafine fiber has a length of 1 $\mu$m or greater. In the case of the production by the electrospinning, the product is capable of being configured so as to have a length of several tens of centimeters, and successive fiber spinning is capable of being provided. Therefore, the product is capable of being produced without limitation of a length.

[Non-electrolytic Polymer and First Solvent]

The non-electrolytic polymer is not specifically limited in so far as the non-electrolytic polymer is formed into a fiber with the result that predetermined water permeability and strength are capable of being secured.

Non-limiting examples of the non-electrolytic polymer include polyolefin such as polyethylene or polypropylene; polyester such as polyethylene terephthalate, polybutylene terephtalate, or polyhydroxycarboxylic acid; a fluorine resin such as PTFE, CTFE, PFA, or polyvinylidene-fluoride (PVDF); halogenated polyolefin such as polyvinyl chlorine; polyamide such as pylon-6 or nylon-66; a urea resin; a phenolic resin; a melamine resin; polystyrene; cellulose; cellulose acetate; cellulose nitrate; polyetherketone; polyetherketoneketone; polyetheretherketone; polysulfone; polyether sulfone; polyimide; polyetherimide; polyamideimide; polybenzimidazole; polycarbonate; polyphenylene sulfide; polyacrylonitrile; polyether nitrile; and a copolymer thereof. The material is not specifically limited to one type; various materials are capable of being selected, where appropriate. However, in cases where such a material is used for processing of high-temperature water that is at a temperature of not less than 50°C, a fluorine resin exhibiting thermal resistance is preferably used, and PVDF is especially preferable. Meanwhile, another polymer such as polyolefin or polyether may be mixed with the fluorine resin.

As a solvent (first solvent) in which the non-electrolytic polymer is dissolved, a solvent in which such a polymer is capable of being dissolved is preferably selected to be used, the solvent being selected from an alcohol such as methanol, ethanol, propanol, isopropanol; ketone; ethers; N-methylpyrrolidone; dimethylformamide; dimethylacetamide (DMAc); formamide; dimethylsulfoxide (DMSO); a chlorinated solvent; and a fluorinated solvent. Preferably, the polymer solution has a concentration of water of not more than 10% by weight.

[Electrolytic Polymer and Second Solvent]

The electrolytic polymer is preferably a polymer having an anion functional group or a cation functional group. Examples of the ionic functional group include a sulfo group, a carboxyl group, a phosphate group, and primary to quaternary amino groups. An example of a base polymer of the electrolytic polymer includes each of the above polymers as the non-electrolytic polymer. Among these, polyethylene, polystyrene, polysulfone, a polymer having heterocyclic polyamide, a fluorine resin, and polyamino acid are especially preferable. Preferably, an electrolytic polymer having fluorine is used as a thermally resistant electrolytic polymer. For example, a fluorine resin having a sulfo group is preferable. An example of a fluorine resin to which the sulfo group is introduced includes commercially available Nafion (registered trademark). The Nafion contains a perfluorosulfonic acid / polytetrafluoroethylene copolymer as a primary component.

A solvent the same as each of the above solvents is capable of being used as a solvent (second solvent) for the electrolytic polymer.

[Mixed Solvent and Mixed Solution]

In an aspect of the invention, a mixed solvent containing the first solvent, which is used for dissolving the non-electrolytic polymer, and the second solvent, which is used for dissolving the electrolytic polymer, is prepared, and the electrolytic polymer and the nan-electrolytic polymer are dissolved in the mixed solvent.

The mixed solvent may contain only the first and second solvents or may contain another third solvent. Examples of the third solvent include water, alcohol, a chlorinated solvent, and a fluorinated solvent.

In another aspect of the invention, the non-electrolytic polymer is dissolved in the first solvent to prepare a first solution, and the electrolytic polymer is dissolved in the second solvent to prepare a second solution. The first and second solutions are mixed with each other to prepare a mixed solution.

In each of the aspects, polymer concentration of a combination of the non-electrolytic polymer and the electrolytic polymer in the mixed solution is approximately in the range from 5 to 40% by weight.

The solvents are determined on the basis of a solubility parameter. Assuming that the solubility parameter is divided into measures such as a dispersion force $\delta D$, a polarity $\delta P$, and a hydrogen bonding strength $\delta H$ and that solvents A and B are mixed with each other at a ratio of X:Y (ratio by weight), the solubility parameter is obtained from the following formula, and a mixture ratio of the solvents is determined on the basis of the solubility parameter obtained. The same is applied to a case in which the solvents contain three or more components. Meanwhile, although $\delta D$ is employed for exemplification, the same is applied to $\delta P$ and $\delta H$.

$$\delta D = (X\delta DA + Y\delta DB) / (X+Y).$$

For example, Nafion (product number: 527122) is capable of being dissolved in water and 1-propanol. The Nafion has electric charges, and therefore a $\delta H$ value has an effect on solubility. The following relationship is provided between the concentration of the Nafion and the $\delta H$ value that is required in order to maintain a dissolved state in such a Nafion concentration:

[ $\delta H > 7$ is provided in cases where the Nafion concentration is 16% by weight, and $\delta H > 5.5$ is provided in cases where the Nafion concentration is 8% by weight]

On the other hand, polyvinylidene-fluoride (PVDF) is not dissolved in water and 1-propanol. The $\delta H$ value that is required for dissolution of PVDF is as follows:

[ $\delta H < 5.5$ is provided in cases where a PVDF concentration is 20% by weight, and $\delta H < 6.1$ is provided in cases where the PVDF concentration is 10% by weight]

Namely, the lower the concentration of water is decreased, the more PVDF is easily dissolved. Therefore, the concentration of water is preferably low, and the related $\delta H$ value is preferably low.

As described above, in view of the values of the solubility parameter that are required for the polymers to be mixed, conditions in which the non-electrolytic polymer and the electrolytic polymer are capable of being mixed with each other are determined.

For example, the Nafion and PVDF are dissolved in the following mixed solvent to concentrations of 8% and 10%, respectively:

water:1-propanol:dimethylacetamide=2:2:35.2,δD=8.15, δP=5.59, and δD=5.98.

A method of preparing the solvents is modified, so that the δH value in the solution in which the Notion is dissolved is capable of being reduced relative to the value described above value. Namely, a solvent that contains more water and that has a water concentration of not less than 10% by weight is also capable of being used as the second solvent, but a solvent (DMAc or the like) having a boiling point that is higher than that of water is added to such a solvent, and then dehydration is performed by evaporation, so that the water concentration in the solvent is capable of being decreased to not more than 10% by weight, thereby reducing the δH value in the solution.

In the evaporation, rapid evaporation / dehydration cause the precipitation of the polymer. Therefore preferably, water is roughly removed at a high temperature, and then temperature of the solvent is gradually or successively decreased, thereby gradually performing the evaporation and dehydration at a low temperature.

A mixture ratio between the non-electrolytic polymer and the electrolytic polymer is capable of being controlled, thereby controlling hydrophilicity and an introduction amount of electric charges in the hybrid polymer fiber material to be produced.

In cases where the mixed solution of the polymer has a temperature that is less than or equal to a certain temperature, the mixed solution may gelate, resulting in a problem for ejection of the polymer during the electrospinning. In this case, the mixed solution is required to be warmed and held at a temperature that is higher than the gelation temperature so as not to gelate during the electro spinning. Meanwhile, such a high temperature provides improved mobility of the solution, thereby providing an advantage that is useful in the ejection of the polymer.

[ Method of Electrospinning]

A method, which is employed to produce the hybrid polymer fiber material by performing the electrospinning using the mixed solution in which the non-electrolytic polymer and electrolytic polymer are dissolved, will be hereinafter described with reference to the accompanying drawings.

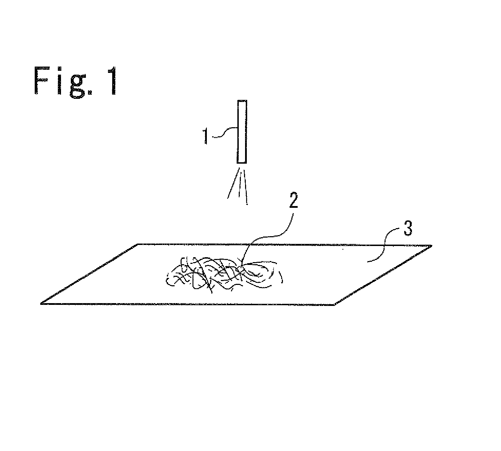

Fig. 1 is a perspective view schematically illustrating the production method.

In the method illustrated in Fig. 1, a voltage is applied between a nozzle 1 and a target 3 (opposite surface) such that the nozzle 1 is positive and such that the target 3 is negative. Then, the mixed solution of the non-electrolytic polymer and the electrolytic polymer is edjected from the nozzle 1 to the target 3, so that the electrolytic polymer and the non-electrolytic polymer are accumulated (deposited) on the target 3, thereby producing a hybrid polymer fiber material 2.

Preferably, a distance between the nozzle 1 and the target 3 is in the range from 50 to 500 mm, and the distance that is approximately in the range from 70 to 300 mm is especially preferable. Preferably, the voltage to be applied between both sides is configured so as to provide a potential gradient that is approximately in the range from 1 to 20 kV/cm.

In cases where the hybrid polymer fiber material is produced as illustrated in Fig. 1, fibers that are ejected from the nozzle 1 and then travel to the target 3 may be warmed to advance the evaporation of the solvents contained in the fibers. In order to perform such warming, an atmosphere of a fiber traveling zone may be warmed, and infrared light may be radiated toward the fiber traveling zone. In addition, the fibers deposited on the target 3 and the hybrid polymer fiber materials retrieved from the target 3 may be warmed to advance the evaporation of the solvents. The evaporation of the solvents is capable of being advanced as described above, thereby producing the hybrid polymer fiber material having high bulk density.

In cases where the hybrid polymer fiber material is produced by electro spinning, the target is provided with a thin film to perform the electro spinning. After the electro spinning, the thin film is removed, thereby being able to produce a free-standing hybrid polymer fiber material. Polyolefin such as polyethylene, polyester, polysulfone, or aluminum foil is capable employed as the material of the thin film.

Meanwhile, in cases where the hybrid polymer fiber material is produced by electro spinning, the target is provided with a porous body, and then the electro spinning is performed. The porous body is integrated as a base material, thereby being able to produce the hybrid polymer fiber material with which the base material is integrated. The porous body to be employed is capable of being selected from nonwoven fabric, a sintered body, a separation film, and the like. Polyolefin such as polyethylene or polypropylene, polyester, polysulfone, or a cellulose derivative is capable of being used as a material of the nonwoven fabric. A polymer such as polyolefin, metal such as stainless steel, or glass is capable of being used as a material of the sintered body. Polyolefin, polyester, polysulfone, a cellulose derivative, or polyamide is capable of being used as a material of the separation film.

In cases where the hybrid polymer fiber material that is produced as described above is used to produce a filter used for fluid filtration, the hybrid polymer fiber materials are stacked in a planar manner or stacked on a porous hollow body, thereby producing the filter used for fluid filtration. In cases where such a filter is used, the fluid is emitted toward the filter in a direction in which the deposition is formed on the target 3 (in a direction vertical to a surface of the target 3).

In cases where such a filter is used as a filter that serves for production of ultrapure water, the filter preferably has a thickness that is approximately in the range from 0.05 to 50 mm and has a bulk density that is approximately in the range from 0.2 to 0.5 g/cm$^3$. Preferably, passing water SV is approximately in the range from 500 to 15000 hr$^{-1}$.

Preferably, the filter according to the embodiment of the invention is used in the case of filtration of ultrapure water having a metallic ion concentration that is in the range from 0.5 to 5 ng/L with the result that the metallic ion concentration is decreased to approximately not more than 0.1 ng/L. However, the filter according to the embodiment of the invention is capable of being applied to processing of a fluid other than water.

Meanwhile, in the embodiment of the invention, another solvent other than the first solvent or the second solvent may be added to the solution in which the non-electrolytic polymer or the electrolytic polymer has been dissolved, and then such a solvent may be partially evaporated by, for example, warming the solution, thereby changing solvent composition.

Examples

Examples and comparative examples will be hereinafter described.

[Comparative Example 1]

<Conditions of Electro spinning>

An electrolytic polymer solution containing Notion of 20% by weight, 1-propanol of 40% by weight, and water of 40% by weight was put into a syringe having a syringe diameter of 30 G. Then, a voltage of 35 kV (potential gradient of 4 kv/cm) was applied such that a syringe was positive and such that a target on which fibers were gathered was negative, thereby attempting to produce Nafion fibers by electro spinning.

<Result>

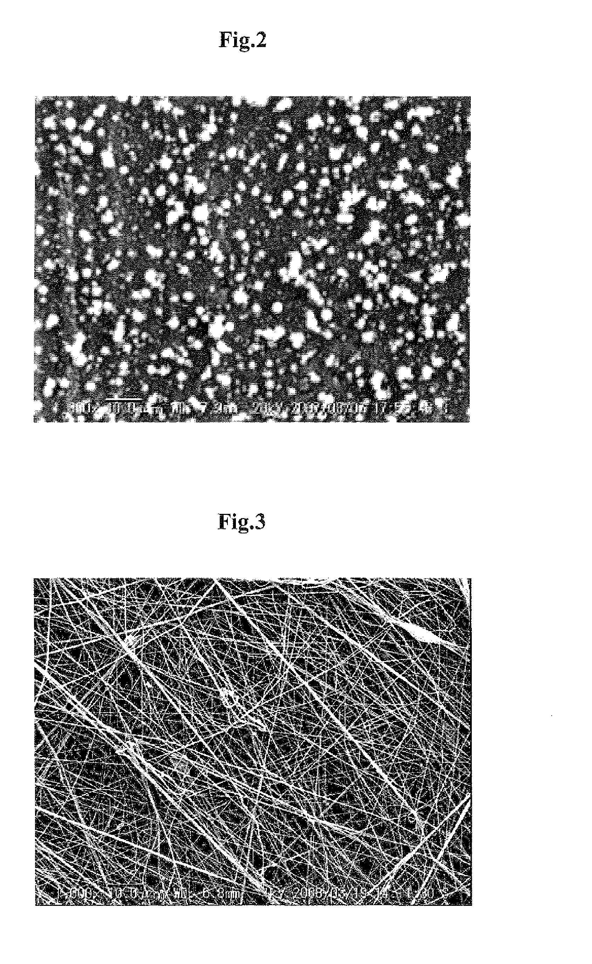

As illustrated in Fig. 2, the Nafion became particles each having a size in then range from 1 to 3 μm, and therefore nonwoven fabric was not produced. Fig. 2 is a photograph in which platinum (Pt) is vapor-deposited on a sample, using a scanning electron microscope (SEM) at a magnification of 1000x.

[Comparative Example 2]

A non-electrolytic polymer solution of polyvinylidene-fluoride (PVDF) of 20% by weight in dimethylacetamide (DMAc) was prepared and was used for the electro spinning under conditions the same as those of the Comparative Example 1.

<Result>

Fibers each having a size of 500 nm were produced by the electro spinning, and polymer fiber materials consisting of the fibers and each having a thickness of 50 μm were produced. Furthermore, the polymer fiber materials were stacked in a planar manner, thereby producing a flat film of nonwoven fabric having a thickness of 2 mm.

[ Example 1]

A solution containing PVDF of 10% by weight, Nafion of 8.3% by weight, water of 4.2% by weight, 1-propanol of 4.2% by weight, and DMAc of 73.3% by weight was prepared as a solution containing the non-electrolytic polymer and the electrolytic polymer. The resultant solution was attempted to be used for the electro spinning under conditions the same as those of the Comparative Example 1. The solution easily gelated and was therefore warmed to be maintained at a temperature of approximately 45°C during the electro spinning. Fig. 3 is a photograph in which platinum is vapor-deposited on the resultant fibers, taken using SEM at a magnification of 1000x.

<Result>

As illustrated in Fig. 3, fibers each having a size of 200 nm were produced by the electro spinning, and hybrid polymer fiber material having a thickness of 50 μm and consisting of the fibers was produced. Furthermore, the hybrid polymer fiber materials were stacked in a planar manner, thereby producing a flat film of nonwoven fabric having a thickness of 2 mm.

[Example 2]

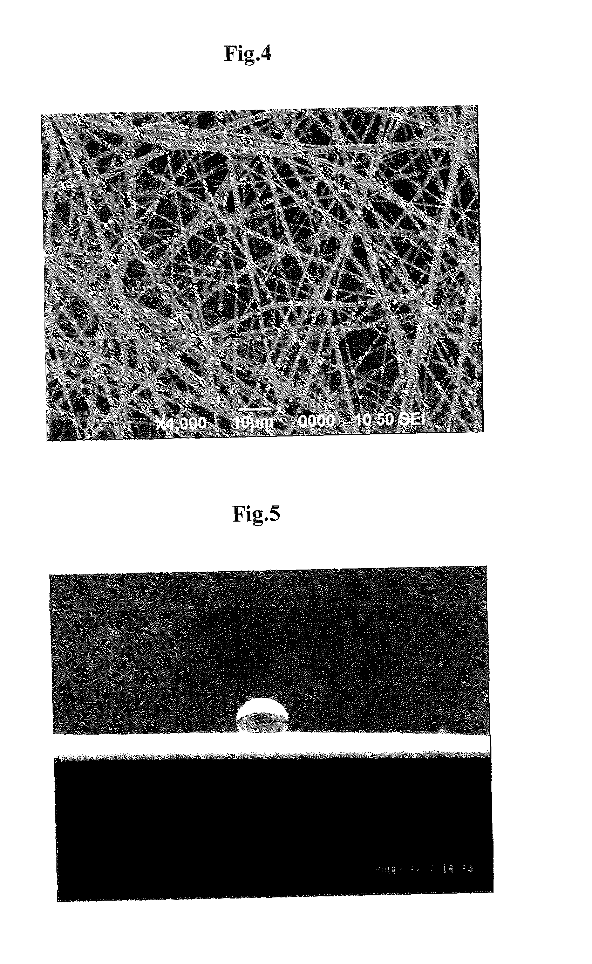

A solution containing PVDF of 15% by weight, Nafion of 4.2% by weight, water of 2.1% by weight, 1-propanol of 2.1% by weight, and DMAc of 76.6% by weight was prepared as a solution containing the non-electrolytic polymer and the electrolytic polymer. The resultant solution was attempted to be used for the electro spinning under conditions the same as those of the Comparative Example 1. The solution was easily gelated and was therefore warmed to be maintained at a temperature of approximately 45°C during the electro spinning. Fig 4 is a photograph in which platinum is vapor-deposited on the resultant fibers, using SEM at a magnification of 1000x.

<Result>

As illustrated in Fig. 4, fibers each having a size of 400 nm were produced by the electro spinning, and hybrid polymer fiber material having a thickness of 50 $\mu$m and consisting of the fibers produced. Furthermore, the hybrid polymer fiber materials were stacked in a planar manner, thereby producing a flat film of nonwoven fabric having a thickness of 2 mm.

<<Test for filtrating dilute metal solution>>

The filters that were made of the flat film of the nonwoven fabric and that were produced in the Comparative Example 2 and the Example 1 were sufficiently washed with hydrochloric acid of 5% by weight, and then the hydrochloric acid was washed away with ultrapure water. Each of the resultant filters was placed on a filter holder having a membrane area of 13 cm$^2$. Then, a standard solution for atomic absorption was added to ultrapure water such that each metal (Na, Mg, Al, K, Ca, Cr, Fe, Cu, Zn) was contained in water to be processed at a concentration of 10 ng/L, thereby preparing feed water. The feed water was filtered through the filter at 30 kPa, and water quality and permeation flux were measured at the time that 20 L had been filtered. In the measurement, sample water was concentrated, and then analysis was performed using an ICPMS (Agilent-4500 commercially available from Yokogawa Analytical Systems, Inc.). In the Comparative Example 2, the filter was hydrophilized using alcohol after the above washing with the ultrapure water.

[Table 1]

| | metal concentration [ng/L] | | | | | | | | | permeation flux [m/h] |
|---|---|---|---|---|---|---|---|---|---|---|
| | Na | Mg | Al | K | Ca | Cr | Fe | Cu | Zn | |
| Comparative Example 2 | 10.0 | 10.0 | 9.7 | 10.0 | 10.0 | 9.8 | 9.7 | 10.0 | 10.0 | 3.0 |
| Example 1 | <0.1 | <0.1 | <0.1 | <0.1 | <0.1 | <0.1 | <0.1 | <0.1 | <0.1 | 0.5 |
| Example 2 | <0.1 | <0.1 | <0.1 | <0.1 | <0.1 | <0.1 | <0.1 | <0.1 | <0.1 | 2.0 |

As illustrated in Table 1, according to the Examples 1 and 2, the concentration of each metal is decreased to a level of not more than 0.1 ng/L

<<Test for Dyeability>>

Although the nonwoven fabric produced in the Comparative Example 2 was attempted to be dyed using 1% methylene blue, the nonwoven fabric was not dyed. On the other hand, each of the nonwoven fabric was produced in the Example 1 and 2 was dyed blue. Accordingly, it was found that the hybrid polymer fiber material according to the present invention had an adsorption property for an ionic substance (pigment composition, in this case).

<<Test for Hydrophilicity>>

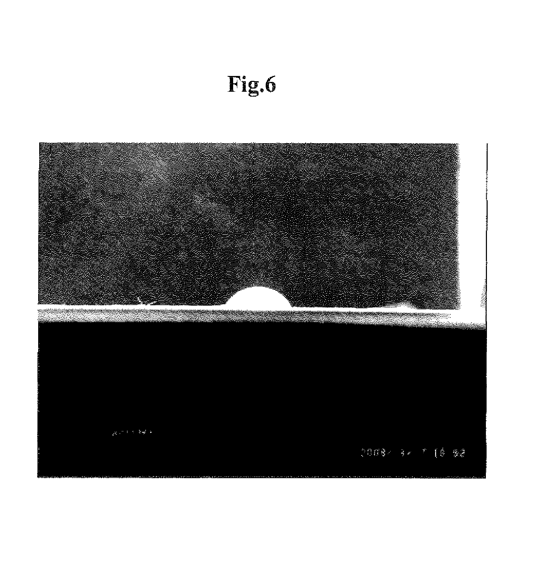

Water droplet of 10 $\mu$L was delivered onto each of the flat films of the nonwoven fabric produced in the Comparative Example 2 and the Example 1. As a result, in the Comparative Example 2, the droplets did not infiltrated into the flat film of the nonwoven fabric and formed spherical shapes as illustrated in Fig. 5; but in the Example 1, the flat film of the nonwoven fabric became wet by the water as illustrated in Fig. 6 with the result that contact angles of no more than 90° were provided. Accordingly, it was found that the flat film of the nonwoven fabric made of the hybrid polymer fiber material according to the embodiment of the invention had hydrophilicity.

[ Example 3]

DMAc of 40 mL was added to the electrolytic polymer solution of 50 mL containing Nafion of 20% by weight, 1-propanol of 40% by weight, and water of 40% by weight, the DMAc being added as a solvent having a boiling point that is higher than that of water. Then, the resultant product was sequentially held at a temperature of 100°C for an hour, at a temperature of 80°C for two hours, and at a temperature of 60°C for eight hours with the result that the water and the 1-propanol each having a boiling point that is lower than that of the DMAc were gradually evaporated, thereby preparing an electrolytic polymer solution (second solution) containing Nafion of 20% by weight, DMAc of 79 to 80% by weight, and water and 1-propanol of less than or equal to 1% by weight. In this case, a $\delta H$ value was 5.0.

The second solution was mixed with the non-electrolytic polymer solution (first solution) containing PVDF of 20% by weight and DMAc of 80% by weight at a ratio by weight of 5:5, thereby preparing a mixed solution containing PVDF of 10% by weight, Nafion of 10% by weight, and DMAc of 79 to 80% by weight, the mixed solution being prepared as a solution containing the non-electrolytic polymer and the electrolytic polymer.

The mixed solution was used for the electro spinning under conditions the same as those of the Comparative Example 1, and fibers each having a size of approximately 400 nm was produced by the electro spinning. The fibers had an ion-exchange capacity of 0.32 meq/g.

[ Example 4]

In a manner the same as that in the Example 3, the electrolytic polymer solution (second solution) was prepared which contained Nafion of 20% by weight, DMAc of 79 to 80% by weight, and 1-propanol and water of less than or equal to 1% by weight.

The second solution was mixed with the first solution at a ratio by weight of 7:3, thereby preparing a mixed solution containing PVDF of 6% by weight, Nafion of 14% by weight, and DMAc of 79 to 80% by weight, the mixed solution being prepared as a solution containing the non-electrolytic polymer and the electrolytic polymer.

The mixed solution was used for the electro spinning under conditions the same as those in the Comparative Example 1, and fibers each having a size of approximately 200 nm was produced by the electro spinning. The fibers had an ion-exchange capacity of 0.44 meq/g.

[ Example 5]

DMSO of 40 mL was added to the electrolytic polymer solution of 50 mL containing Nafion of 20% by weight, 1-propanol of 40% by weight, and water of 40% by weight, the DMSO being added as a solvent having a boiling point that is higher than that of water. Then, the resultant product was sequentially held at a temperature of 100°C for an hour, at a temperature of 80°C for two hours, and at a temperature of 60°C for eight hours with the result that the water and the 1-propanol each having a boiling point that is lower than that of the DMSO were gradually evaporated, thereby preparing an electrolytic polymer solution (second solution) containing Nafion of 20% by weight, DMSO of 79 to 80% by weight, and 1-propanol and water of less than or equal to 1% by weight.

The second solution was mixed with the non-electrolytic polymer solution (first solution) containing PVDF of 20% by weight and DMSO of 80% by weight at a ratio by weight of 5:5, thereby preparing a mixed solution containing PVDF of 10% by weight, Nafion of 10% by weight, and DMSO of 79 to 80% by weight, the mixed solution being prepared as a solution containing the non-electrolytic polymer and the electrolytic polymer.

The mixed solution was used for the electro spinning under conditions the same as those in the Comparative Example 1, and fibers having a size of approximately 400 nm were produced by the electro spinning.

[ Example 6]

In a manner the same as that in the Example 1 except that quaternary ammoniated polysulfone was used in place of the Nation, the electrolytic polymer solution (second solution) was prepared which contained the quaternary ammoniated polysulfone of 20% by weight, DMAc of 79 to 80% by weight, and 1-propanol and water of less than or equal to 1% by weight.

The second solution was mixed with the non-electrolytic polymer solution (first solution) containing PVDF of 20% by weight and DMAc of 80% by weight at a ratio by weight of 5:5, thereby preparing a mixed solution containing quaternary ammoniated polysulfone of 10% by weight, PVDF of 10% by weight, and DMAc of 79 to 80% by weight, the mixed solution being prepared as a solution containing the non-electrolytic polymer and the electrolytic polymer.

The mixed solution was used for the electro spinning under conditions the same as those in the Comparative Example 1, and fibers each containing a composite of PVDF and quaternary ammoniated polysulfone were produced by the electro spinning. The fibers had an ion-exchange capacity of 0.3 meq/g.

Although an aspect of the invention has been described on the basis of certain embodiments, it will be obvious to those skilled in the art that the embodiments of the invention are capable of being variously modified without departing from the spirit and scope of the invention.

The present invention is based on Japanese Patent Application No. 2008-083390 filed in the Japanese Patent Office on March 27, 2008, and the entire contents of which are incorporated herein by reference.

**Claims**

1.  A method of producing a polymer fiber material comprising:

    a step of preparing a material solution that contains a non-electrolytic polymer and a electrolytic polymer dissolved in a mixed solvent, the mixed solvent at least containing a first solvent in which the non-electrolytic polymer is soluble and containing a second solvent in which the electrolytic polymer is soluble, the first solvent containing water at a concentration of not more than 10% by weight; and
    a step of performing electrospinning by using the mixed solution.

2.  The method of producing a polymer fiber material according to Claim 1, wherein the step of preparing the material solution comprises:

    a step of preparing the mixed solvent in which the two types of the polymers are both dissolved, the mixed solvent at least containing the first solvent and the second solvent; and
    a step of preparing the material solution by dissolving the non-electrolytic polymer and the electrolytic polymer in the mixed solvent.

3.  The method of producing a polymer fiber material according to Claim 1, wherein the step of preparing the material solution comprises:

    a step of preparing a first solution by dissolving the non-electrolytic polymer in the first solvent;
    a step of preparing a second solution by dissolving the electrolytic polymer in the second solvent; and
    a step of preparing the material solution by mixing the first solution with the second solution such that the two types of the polymers are both maintained in a dissolved state.

4.  The method of producing a polymer fiber material according to Claim 1, wherein the non-electrolytic polymer and/or the electrolytic polymer is a fluorine polymer.

5.  The method of producing a polymer fiber material according to Claim 1, wherein the non-electrolytic polymer is polyvinylidene fluoride.

6.  The method of producing a polymer fiber material according to Claim 1, wherein the electrolytic polymer is a perfluorocarbon sulfonate polymer.

7.  The method of producing a polymer fiber material according to Claim 1, wherein the solvent in the material solution at least contains alcohol and water and has a polymer concentration in a range from 5 to 40% by weight.

8.  The method of producing a polymer fiber material according to Claim 1, wherein the material solution is held at a temperature higher than a gelation temperature for the purpose of electrospinning.

9.  The method of producing a polymer fiber material according to Claim 1, wherein the second solvent is prepared by adding a solvent having a boiling point higher than that of water to a solvent containing water at a concentration of not less than 10% by weight, and then performing dehydration by evaporation with the result that the water concentration is decreased to less than or equal to 10% by weight.

10. The method of producing a polymer fiber material according to Claim 9, wherein the evaporation is performed with gradually and successively decreasing the temperature of the solvent.

**11.** A polymer fiber material produced by the method according to any one of Claims 1 to 10.

**12.** A filter used for fluid filtration, wherein the filter includes the polymer fiber material according to Claim 11.

EP 2 258 896 A1

Fig. 1

12

Fig.2

Fig.3

## Fig.4

## Fig.5

Fig.6

## INTERNATIONAL SEARCH REPORT

| International application No. |
|---|
| PCT/JP2009/055901 |

A.  CLASSIFICATION OF SUBJECT MATTER
*D04H1/72*(2006.01)i, *B01D39/16*(2006.01)i, *B01D71/32*(2006.01)i, *B01D71/34*
(2006.01)i, *B01J20/26*(2006.01)i, *C02F1/28*(2006.01)i, *D01D5/04*(2006.01)i,
*D04H1/42*(2006.01)i
According to International Patent Classification (IPC) or to both national classification and IPC

B.  FIELDS SEARCHED

Minimum documentation searched (classification system followed by classification symbols)
D01D1/00-13/02, D04H1/00-18/00

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2006-144138 A  (Gunze Ltd.), | 1,3,4,6,11, |
|  | 08 June, 2006 (08.06.06), | 12 |
| Y | Claims 1, 4; Par. Nos. [0014], [0030] | 8 |
| A | (Family: none) | 2,5,7,9,10 |
|  |  |  |
| Y | JP 2007-517991 A  (KIM, Hak-Yong), | 8 |
|  | 05 July, 2007 (05.07.07), |  |
|  | Par. No. [0073] |  |
|  | & WO 2005/073441 A1 |  |
|  | Page 20, line 9 to page 22, line 6 |  |
|  | & EP 1709218 A1 |  |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered  to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 June, 2009 (02.06.09) | 09 June, 2009 (09.06.09) |

| Name and mailing address of the ISA/ | Authorized officer |
|---|---|
| Japanese Patent Office |  |
| Facsimile No. | Telephone No. |

Form PCT/ISA/210 (second sheet) (April 2007)

**INTERNATIONAL SEARCH REPORT**

International application No.

PCT/JP2009/055901

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-186831 A (Independent Administrative Institution National Institute for Materials Science), 26 July, 2007 (26.07.07), Claims (Family: none) | 1-12 |
| A | WO 2007/035011 A1 (KIM, Hak-Yong), 29 March, 2007 (29.03.07), Claims & JP 2009-510272 A & US 2008/0102145 A1 & EP 1929074 A1 | 1-12 |
| A | JP 2007-30175 A (Japan Vilene Co., Ltd.), 08 February, 2007 (08.02.07), Claims; Par. No. [0019] (Family: none) | 1,5 |

Form PCT/ISA/210 (continuation of second sheet) (April 2007)

**EP 2 258 896 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006144138 A
- JP 2007092237 A
- JP 2008083390 A